# EUROPÄISCHE PATENTANMELDUNG

(11) **EP 3 098 879 A1**
(43) Veröffentlichungstag der Anmeldung: **30.11.2016**
(21) Anmeldenummer: 15169534.3
(22) Anmeldetag: 28.05.2015
(51) Int. Cl.: H01M 2/16, H01M 10/0525, H01M 10/42, H01M 10/48

(54) **VERFAHREN ZUR ERKENNUNG EINER ZERSETZUNG EINER KATHODE EINER BATTERIEZELLE UND BATTERIEZELLE**

(71) Anmelder: Lithium Energy and Power GmbH & Co. KG, 70469 Stuttgart (DE)
(72) Erfinder: Leuthner, Stephan, 71229 Leonberg (DE); Wurm, Calin Iulius, 86405 Meitingen (DE)
(74) Vertreter: Bee, Joachim

(57) **Zusammenfassung**

Die Erfindung betrifft ein Verfahren zur Erkennung einer Zersetzung einer Kathode einer Batteriezelle (2), wobei eine in einem Elektrolyt der Batteriezelle (2) enthaltene Substanz mit Sauerstoff reagiert, der bei der Zersetzung der Kathode frei wird, wobei durch die Reaktion der Substanz mit dem Sauerstoff eine optische Wirkung erzeugt wird, und die optische Wirkung von einem innerhalb eines Zellengehäuses (3) der Batteriezelle (2) angeordneten optischen Sensor (70) detektiert wird. Die Erfindung betrifft auch eine Batteriezelle (2), die ein Zellengehäuse (3), eine Anode (5), eine Kathode, einen Separator und einen Elektrolyt umfasst. Dabei ist in dem Elektrolyt eine Substanz enthalten, die mit Sauerstoff reagiert, wobei die Reaktion der Substanz mit Sauerstoff eine optische Wirkung erzeugt, und innerhalb des Zellengehäuses (3) ist ein optischer Sensor (70) angeordnet, welcher die optische Wirkung detektiert.

## Beschreibung

Die Erfindung betrifft Verfahren zur Erkennung einer Zersetzung einer Kathode einer Batteriezelle sowie eine Batteriezelle, welche ein Zellengehäuse, eine Anode, eine Kathode, einen Separator und einen Elektrolyt umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-lonen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-lonen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Graphit oder Silizium.

In das Aktivmaterial der Anode sind Lithiumatome eingelagert. Beim Betrieb der Batteriezelle, also bei einem Entladevorgang, fließen Elektronen in einem äußeren Stromkreis von der Anode zur Kathode. Innerhalb der Batteriezelle wandern Lithiumionen bei einem Entladevorgang von der Anode zur Kathode. Dabei lagern die Lithiumionen aus dem Aktivmaterial der Anode reversibel aus, was auch als Deinterkalation bezeichnet wird. Bei einem Ladevorgang der Batteriezelle wandern die Lithiumionen von der Kathode zu der Anode. Dabei lagern die Lithiumionen wieder in das Aktivmaterial der Anode reversibel ein, was auch als Interkalation bezeichnet wird.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die beiden Elektroden des Elektrodenwickels werden mittels Kollektoren elektrisch mit Polen der Batteriezelle, welche auch als Terminals bezeichnet werden, verbunden. Eine Batteriezelle umfasst in der Regel eine oder mehrere Elektrodeneinheiten. Die Elektroden und der Separator sind von einem in der Regel flüssigen Elektrolyt umgeben. Der Elektrolyt ist für die Lithiumionen leitfähig und ermöglicht den Transport der Lithiumionen zwischen den Elektroden.

In einem Fehlerfall, beispielsweise bei einem Kurzschluss, kann es zu einem Temperaturanstieg in der Batteriezelle kommen. Bei ausreichend hoher Temperatur beginnt eine Zersetzung der Kathode, wobei unter anderem Sauerstoff freigesetzt wird. Der freigesetzte Sauerstoff kann mit dem Elektrolyt oder anderen Komponenten der Batteriezelle reagieren, wodurch zusätzlich Energie freigesetzt wird. Dadurch erfolgt eine Zerstörung der Batteriezelle, eventuell in Form einer Explosion.

Eine gattungsgemäße Batteriezelle ist in der DE 10 2012 217 451 A1 offenbart. Die Batteriezelle weist ein Zellengehäuse auf, welches beispielsweise aus einem Metall gefertigt ist. Das Zellengehäuse ist prismatisch, insbesondere quaderförmig, ausgestaltet und druckfest ausgebildet. Die Batteriezelle umfasst eine Membran, welche sich bei einem Überdruck innerhalb des Zellengehäuses verformt und dabei einen Kurzschluss auslöst.

Aus der DE 10 2012 215 884 A1 ist eine Lithium-Ionen-Batterie bekannt, welche eine Detektionssubstanz zum Detektieren einer Leckage des Zellengehäuses aufweist.

In der DE 23 46 115 C3 sind ein Verfahren sowie eine Vorrichtung zur Anzeige des Ladezustandes eines Akkumulators offenbart. Der Akkumulator weist dabei einen Farbstoff auf, der bei einer bestimmten Umgebungstemperatur seine Farbe ändert.

Die DE 10 2010 038 860 A1 offenbart eine Lithium-Ionen-Batterie mit einem Warnsystem zur Überwachung von kritischen Zuständen. Die Batterie umfasst dabei unter anderem Temperatursensoren zur Überwachung der Temperatur der Batterie.

Die DE 10 2010 021 095 A1 offenbart einen Akkumulator mit Sensormitteln zum Detektieren einer Verformung oder einer sonstigen Beschädigung des Gehäuses des Akkumulators.

### Offenbarung der Erfindung

Es wird ein Verfahren zur Erkennung einer Zersetzung einer Kathode einer Batteriezelle vorgeschlagen. Das erfindungsgemäße Verfahren basiert darauf, dass eine in einem Elektrolyt der Batteriezelle enthaltene Substanz mit Sauerstoff reagiert, welcher bei der Zersetzung der Kathode frei wird. Dabei wird durch die Reaktion der in dem Elektrolyt enthaltenen Substanz mit dem bei der Zersetzung der Kathode frei werdenden Sauerstoff eine optische Wirkung erzeugt. Die durch diese Reaktion erzeugte optische Wirkung wird von einem innerhalb eines Zellengehäuses der Batteriezelle angeordneten optischen Sensor detektiert.

Wenn die durch die besagte Reaktion erzeugte optische Wirkung von dem optischen Sensor detektiert wird, wird vorteilhaft ein entsprechendes Signal an eine Steuereinheit ausgegeben. So kann die betreffende Batteriezelle gekennzeichnet und ausgetauscht werden, bevor eine völlige Zerstörung der Batteriezelle eingetreten ist.

Gemäß einer vorteilhaften Ausgestaltung der Erfindung basiert die optische Wirkung, die durch die Reaktion der in dem Elektrolyt enthaltenen Substanz mit dem bei der Zersetzung der Kathode frei werdenden Sauerstoff erzeugt wird, auf Chemolumineszenz. Bei der Reaktion innerhalb des Zellengehäuses wird somit eine elektromagnetische Strahlung, beispielsweise im Infrarotbereich, im sichtbaren Bereich oder im Ultraviolettbereich erzeugt und von dem optischen Sensor detektiert.

Elektromagnetische Strahlung im Infrarotbereich, im sichtbaren Bereich sowie im Ultraviolettbereich wird im Folgenden auch als Licht bezeichnet.

Gemäß einer anderen vorteilhaften Ausgestaltung der Erfindung basiert die optische Wirkung, die durch die Reaktion der in dem Elektrolyt enthaltenen Substanz mit dem bei der Zersetzung der Kathode frei werdenden Sauerstoff erzeugt wird, auf einer Änderung der Farbe des Elektrolyten. In diesem Fall wird somit die Änderung der Farbe des Elektrolyten von dem optischen Sensor detektiert.

Es wird ferner eine Batteriezelle vorgeschlagen, welche ein Zellengehäuse, eine Anode, eine Kathode, einen Separator und einen Elektrolyt umfasst. Erfindungsgemäß ist dabei in dem Elektrolyt eine Substanz enthalten, die, wenn sie in Kontakt mit Sauerstoff kommt, mit diesem Sauerstoff reagiert, wobei die Reaktion der Substanz mit Sauerstoff eine optische Wirkung erzeugt. Die in dem Elektrolyt enthaltene Substanz reagiert insbesondere mit bei einer Zersetzung der Kathode frei werdendem Sauerstoff. Innerhalb des Zellengehäuses der Batteriezelle ist ferner ein optischer Sensor angeordnet, welcher die optische Wirkung, die durch die Reaktion der in dem Elektrolyt enthaltenen Substanz mit dem Sauerstoff erzeugt wird, detektiert.

Die Kathode gibt bei einer Temperatur von über 180°C Sauerstoff ab, welcher mit der in dem Elektrolyt enthaltenen Substanz reagieren kann. Vorzugsweise wird eine Substanz ausgewählt, die erst bei einer verhältnismäßig hohen Temperatur mit dem bei einer Zersetzung der Kathode frei werdenden Sauerstoff reagiert. Als Materialien für besagte Substanz kommen unter anderem Luminol sowie Lucigenin in Frage.

Der innerhalb des Zellengehäuses der Batteriezelle angeordnete optische Sensor ist vorteilhaft mit einer externen Steuereinheit verbunden und gibt an diese Steuereinheit ein entsprechendes Signal aus, wenn der optische Sensor die durch die Reaktion erzeugte optische Wirkung detektiert. So kann die betreffende Batteriezelle gekennzeichnet und ausgetauscht werden, bevor eine völlige Zerstörung der Batteriezelle eingetreten ist.

Gemäß einer vorteilhaften Ausgestaltung der Erfindung basiert die optische Wirkung, die durch die Reaktion der in dem Elektrolyt enthaltenen Substanz mit dem bei der Zersetzung der Kathode frei werdenden Sauerstoff erzeugt wird, auf Chemolumineszenz. Bei der Reaktion innerhalb des Zellengehäuses wird somit eine elektromagnetische Strahlung, beispielsweise im Infrarotbereich, im sichtbaren Bereich oder im Ultraviolettbereich erzeugt, welche der optische Sensor detektiert.

Für die in dem Elektrolyt enthaltene Substanz kommen unter anderem folgende Materialien in Frage, die zu einer Chemolumineszenzreaktion fähig sind:
- Luminol (o-Aminophthaloylhydrazid)
- Lucigenin (10-Methyl-9-(10-methylacridin-10-ium-9-yl)acridin-10-ium dinitrate)
- Trans-1-(2'-Methoxyvinyl)Pyrene
Auch weitere Materialien sind einsetzbar.

Gemäß einer vorteilhaften Weiterbildung der Erfindung ist der optische Sensor als lichtempfindlicher Sensor ausgeführt. Als lichtempfindlicher Sensor werden in diesem Zusammenhang Sensoren bezeichnet, die eine erzeugte elektromagnetische Strahlung, beispielsweise im Infrarotbereich, im sichtbaren Bereich oder im Ultraviolettbereich aufnehmen und detektieren können. Beispiele für lichtempfindliche Sensoren sind unter anderem Fotodioden sowie CCD-Kameras.

Gemäß einer anderen vorteilhaften Weiterbildung der Erfindung ist der optische Sensor ein Endbereich eines an das Zellengehäuse der Batteriezelle angeschlossenen Lichtwellenleiters. Dabei durchgreift der Lichtwellenleiter eine dafür vorgesehene Durchführöffnung in dem Zellengehäuse der Batteriezelle und ist mit einer externen Steuereinheit verbunden. Der Endbereich des Lichtwellenleiters detektiert dabei innerhalb des Zellengehäuses erzeugtes Licht, welches in den Endbereich des Lichtwellenleiters einstrahlt. Der Lichtwellenleiter überträgt das in den Endbereich des Lichtwellenleiters eingestrahlte Licht zu der externen Steuereinheit. Der Lichtwellenleiter ist dabei insbesondere als Glasfaserkabel ausgeführt.

Vorteilhaft ist der Separator, welcher zwischen der Anode und der Kathode angeordnet ist, lichtleitend ausgebildet. Somit überträgt der Separator innerhalb des Zellengehäuses erzeugtes Licht zu dem optischen Sensor, der vorteilhaft in der Nähe des Separators angeordnet ist.

Als Materialien für den Separator kommen unter anderem Polyolephine (Polyolefine) sowie Polyethylenterephthalat in Frage.

Ebenso vorteilhaft umfasst der Separator lichtleitende Fasern. Somit übertragen die lichtleitenden Fasern des Separators innerhalb des Zellengehäuses erzeugtes Licht zu dem optischen Sensor, der vorteilhaft in der Nähe des Separators angeordnet ist. Die lichtleitenden Fasern sind insbesondere als Glasfasern ausgeführt und in den Separator eingebettet.

Als Materialien für lichtleitende Fasern kommen unter anderem Polymethylmethacrylat, Glasfaservlies, Fluorinierte Polymere und Vliese in Frage.

Gemäß einer anderen vorteilhaften Ausgestaltung der Erfindung basiert die optische Wirkung, die durch die Reaktion der in dem Elektrolyt enthaltenen Substanz mit dem bei der Zersetzung der Kathode frei werdenden Sauerstoff erzeugt wird, auf einer Änderung der Farbe des Elektrolyten.

Als Materialien für die in dem Elektrolyt enthaltene Substanz kommen in diesem Fall unter anderem Indigo sowie Leukomethylenblau in Frage. Indigo wird bei Zufuhr von Sauerstoff blau. Leukomethylenblau ist farblos und wird im oxidierten Zustand blau.

Gemäß einer anderen vorteilhaften Weiterbildung der Erfindung ist der optische Sensor als Spektrometer ausgeführt. Der als Spektrometer ausgeführte optische Sensor kann die Farbe des Elektrolyten und somit auch eine Änderung der Farbe des Elektrolyten detektieren.

Das erfindungsgemäße Verfahren findet vorteilhaft Verwendung in einer Batteriezelle eines Elektrofahrzeugs (EV), eines Hybridfahrzeugs (HEV) oder eines Plug-In-Hybridfahrzeugs (PHEV). Auch eine Verwendung in einer stationären Batterie oder in einer Batterie in einer marinen Anwendung ist denkbar.

Eine erfindungsgemäße Batteriezelle findet vorteilhaft Verwendung in einem Elektrofahrzeug (EV), in einem Hybridfahrzeug (HEV) oder in einem Plug-In-Hybridfahrzeug (PHEV). Auch eine Verwendung in einer stationären Batterie oder in einer Batterie in einer marinen Anwendung ist denkbar.

### Vorteile der Erfindung

Das erfindungsgemäße Verfahren gestattet eine frühzeitige Erkennung einer Zersetzung der Kathode der Batteriezelle. Eine beginnende Zersetzung der Kathode der Batteriezelle kann erkannt werden, bevor die ganze Batteriezelle zerstört wird. Durch frühzeitigen Austausch der Batteriezelle kann insbesondere eine Explosion der Batteriezelle vermieden werden. Ferner gestattet das erfindungsgemäße Verfahren die Detektion von verhältnismäßig kleinen Mengen an Sauerstoff, die bei Beginn einer Zersetzung der Kathode freigesetzt werden. Das erfindungsgemäße Verfahren eignet sich zur Erkennung einer lokalen Zersetzung, welche beispielsweise durch Dendrite oder lokale Kurzschlüsse ausgelöst wird. Das erfindungsgemäße Verfahren eignet sich auch zur Erkennung einer globalen Zersetzung, welche beispielsweise durch Überladung oder Überhitzung ausgelöst wird.

### Kurze Beschreibung der Zeichnungen

Ausführungsformen der Erfindung werden anhand der Zeichnungen und der nachfolgenden Beschreibung näher erläutert.

Es zeigen:
- Figur 1:: eine Explosionsdarstellung einer erfindungsgemäßen Batteriezelle gemäß einer ersten Ausführungsform und
- Figur 2:: eine Explosionsdarstellung einer erfindungsgemäßen Batteriezelle gemäß einer zweiten Ausführungsform.

### Ausführungsformen der Erfindung

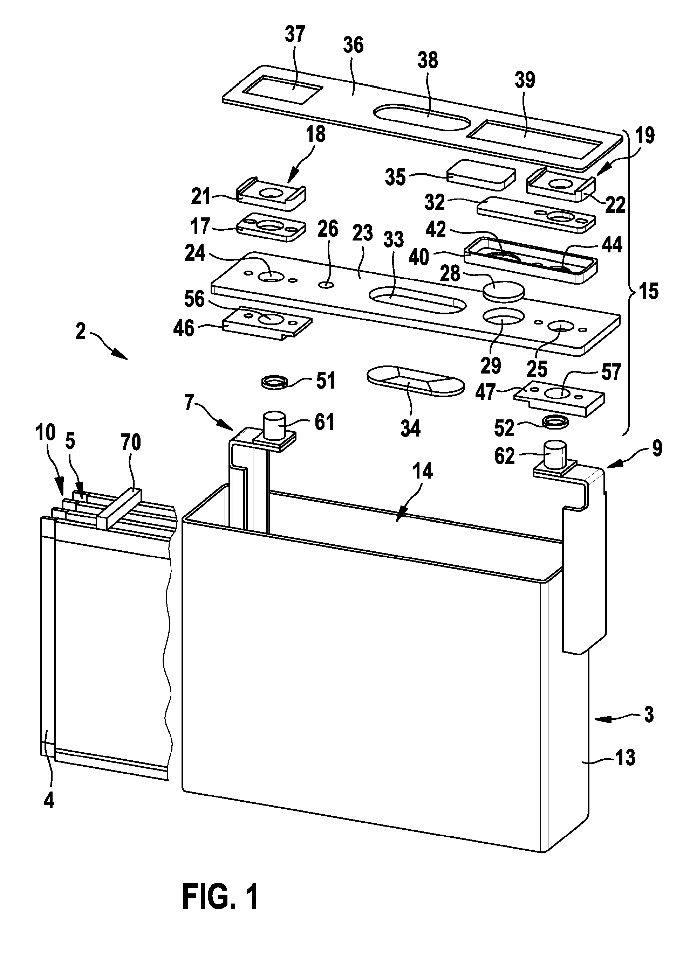

Eine Batteriezelle 2 gemäß einer ersten Ausführungsform ist in Figur 1 in Explosionsdarstellung gezeigt. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 umfasst einen quaderförmigen Behälter 13, welcher an einer Seite eine Behälteröffnung 14 aufweist. Die Behälteröffnung 14 wird durch eine Deckelanordnung 15 verschlossen, welche unter anderem eine Deckplatte 23 umfasst, die vorliegend ebenfalls elektrisch leitend ausgeführt und beispielsweise aus Aluminium gefertigt ist.

Der quaderförmigen Behälter 13 und die Deckplatte 23 des Zellengehäuses 3 sind dabei elektrisch und mechanisch miteinander verbunden, insbesondere verschweißt. Auch andere Ausführungsformen des Zellengehäuses 3, beispielsweise zylindrisch, insbesondere kreiszylindrisch, sind denkbar.

Die Batteriezelle 2 umfasst ein negatives Terminal 21 und ein positives Terminal 22. Über die Terminals 21, 22 kann eine von der Batteriezelle 2 zur Verfügung gestellte Spannung abgegriffen werden. Ferner kann die Batteriezelle 2 über die Terminals 21, 22 auch geladen werden. Die Terminals 21, 22 sind beabstandet voneinander auf der Deckplatte 23 des prismatischen Zellengehäuses 3 angeordnet.

Innerhalb des Zellengehäuses 3 der Batteriezelle 2 ist ein Elektrodenwickel 10 angeordnet, welcher zwei Elektroden, nämlich eine Anode 5 und eine in dieser Darstellung nicht sichtbare Kathode, aufweist. Die Anode 5 und die Kathode sind jeweils folienartig ausgeführt und unter Zwischenlage eines in dieser Darstellung nicht sichtbaren Separators zu dem Elektrodenwickel 10 gewickelt. Es ist auch denkbar, dass mehrere Elektrodenwickel 10 in dem Zellengehäuse 3 vorgesehen sind.

Zwischen dem Elektrodenwickel 10 und der Deckplatte 23 des Zellengehäuses 3, und somit innerhalb des Zellengehäuses 3, ist ein optischer Sensor 70 angeordnet. Der optische Sensor 70 ist vorliegend als lichtempfindlicher Sensor ausgeführt und als Fotodiode ausgestaltet. Auch andere Ausgestaltungen des optischen Sensors 70, beispielsweise als CCD-Kamera oder als Spektrometer sind denkbar.

Die Anode 5 und die Kathode sind durch den Separator voneinander getrennt. Der Separator ist ebenfalls folienartig ausgebildet. Der Separator ist dabei elektrisch isolierend ausgebildet, aber ionisch leitfähig, also für Lithiumionen durchlässig.

Ferner ist der Separator lichtleitend ausgebildet. Der Separator überträgt somit Licht, welches innerhalb des Zellengehäuses 3 erzeugt wird, zu dem optischen Sensor 70, der in unmittelbarer Nähe des Elektrodenwickels 10 und des Separators angeordnet ist. Der Separator kann auch lichtleitende Fasern aufweisen, die innerhalb des Zellengehäuses 3 erzeugtes Licht zu dem optischen Sensor 70 übertragen. Die lichtleitenden Fasern sind insbesondere als Glasfasern ausgeführt und in den Separator eingebettet.

Die Anode 5 umfasst ein anodisches Aktivmaterial, welches folienartig ausgeführt ist. Das anodische Aktivmaterial weist als Grundstoff Silizium oder eine Silizium enthaltende Legierung auf. Die Anode 5 umfasst ferner einen Stromableiter 4, welcher ebenfalls folienartig ausgebildet ist. Das anodische Aktivmaterial und der Stromableiter 4 der Anode 5 sind flächig aneinander gelegt und miteinander verbunden.

Der Stromableiter 4 der Anode 5 ist elektrisch leitfähig ausgeführt und aus einem Metall gefertigt, beispielsweise aus Kupfer. Der Stromableiter 4 der Anode 5 steht auf einer ersten Schmalseite über einen Rand des Elektrodenwickels 10 über und ist mit einem ersten Kollektor 7 verbunden. Über den ersten Kollektor 7 ist der Stromableiter 4 der Anode 5 elektrisch mit dem negativen Terminal 21 der Batteriezelle 2 verbunden.

Die Kathode umfasst ein kathodisches Aktivmaterial, welches folienartig ausgeführt ist. Das kathodische Aktivmaterial weist als Grundstoff ein Metalloxid auf, beispielsweise Lithium-Kobalt-Oxid (LiCoO₂). Die Kathode umfasst ferner einen Stromableiter, welcher ebenfalls folienartig ausgebildet ist. Das kathodische Aktivmaterial und der Stromableiter sind flächig aneinander gelegt und miteinander verbunden.

Der Stromableiter der Kathode ist elektrisch leitfähig ausgeführt und aus einem Metall gefertigt, beispielsweise aus Aluminium. Der Stromableiter der Kathode steht auf einer zweiten Schmalseite, welche der ersten Schmalseite gegenüber liegt, über einen Rand des Elektrodenwickels 10 über und ist mit einem zweiten Kollektor 9 verbunden. Über den zweiten Kollektor 9 ist der Stromableiter der Kathode elektrisch mit dem positiven Terminal 22 der Batteriezelle 2 verbunden.

Der erste Kollektor 7, welcher sich innerhalb des Zellengehäuses 3 befindet, ist mittels einer ersten Kontaktanordnung 18 mit dem negativen Terminal 21 verbunden, welches sich außerhalb des Zellengehäuses 3 befindet. Der zweite Kollektor 9, welcher sich innerhalb des Zellengehäuses 3 befindet, ist mittels einer zweiten Kontaktanordnung 19 mit dem positiven Terminal 22 verbunden, welches sich außerhalb des Zellengehäuses 3 befindet.

Das Zellengehäuse 3 der Batteriezelle 2 ist mit einem flüssigen Elektrolyt gefüllt. Der Elektrolyt umgibt die Anode 5, die Kathode und den Separator. Auch der Elektrolyt ist ionisch leitfähig. Der Elektrolyt wird nach dem Zusammenbau des Zellengehäuses 3 durch eine Einfüllöffnung 26 in der Deckplatte 23 in das Zellengehäuse 3 eingefüllt. Danach wird die Einfüllöffnung 26 mittels eines nicht dargestellten Dichtstopfens verschlossen.

In dem Elektrolyt ist dabei eine Substanz enthalten, die, wenn sie in Kontakt mit Sauerstoff kommt, mit diesem Sauerstoff reagiert. Bei dieser Substanz handelt es sich vorliegend um Luminol. Bei einer solchen Reaktion von Luminol mit Sauerstoff wird eine auf Chemolumineszenz basierende, optische Wirkung erzeugt. Für die in dem Elektrolyt enthaltene Substanz können auch andere Materialien verwendet werden. Beispielsweise kann ein Material gewählt werden, welches bei einer Reaktion mit Sauerstoff einer Änderung der Farbe des Elektrolyten bewirkt.

Der erste Kollektor 7 ist mit einem ersten Anschlussbolzen 61 verbunden, welcher auf einer dem Elektrodenwickel 10 abgewandten Seite von dem ersten Kollektor 7 weg ragt. Der erste Anschlussbolzen 61 durchragt dabei eine erste Decköffnung 24 in der Deckplatte 23 der Deckelanordnung 15 und ist an seinem dem ersten Kollektor 7 abgewandten Ende mit dem negativen Terminal 21 verbunden.

Der zweite Kollektor 9 ist mit einem zweiten Anschlussbolzen 62 verbunden, welcher auf einer dem Elektrodenwickel 10 abgewandten Seite von dem zweiten Kollektor 9 weg ragt. Der zweite Anschlussbolzen 62 durchragt dabei eine zweite Decköffnung 25 in der Deckplatte 23 der Deckelanordnung 15 und ist an seinem dem zweiten Kollektor 9 abgewandten Ende mit dem positiven Terminal 22 verbunden.

Die Deckelanordnung 15 umfasst vorliegend eine Potentialplatte 17, welche elektrisch leitfähig ausgeführt ist, und welche zwischen der Deckplatte 23 und dem negativen Terminal 21 angeordnet ist. Die Potentialplatte 17 verbindet die Deckplatte 23 elektrisch mit dem negativen Terminal 21. Somit liegt das Zellengehäuse 3 auf dem gleichen elektrischen Potential wie das negative Terminal 21.

Anstelle der Potentialplatte 17 kann auch eine Isolation vorgesehen sein, welche die Deckplatte 23 elektrisch von dem negativen Terminal 21 isoliert. In diesem Fall können das Zellengehäuse 3 und das negative Terminal 21 auf verschiedenen elektrischen Potentialen liegen.

Die Deckelanordnung 15 umfasst ferner eine Verbindungsplatte 32, welche ebenfalls elektrisch leitfähig ausgeführt ist, und welche zwischen der Deckplatte 23 und dem positiven Terminal 22 angeordnet ist. Die Verbindungsplatte 32 ist elektrisch mit dem positiven Terminal 22 verbunden. Auf der der Deckplatte 23 abgewandten Seite der Verbindungsplatte 32, seitlich neben dem positiven Terminal 22, ist ferner eine Verbindungsplattenisolierung 35 angebracht, vorliegend aufgeklebt.

Zwischen der Deckplatte 23 und der Verbindungsplatte 32 ist ein Abstandsisolator 40 vorgesehen, welcher die Deckplatte 23 elektrisch von der Verbindungsplatte 32 und dem positiven Terminal 22 isoliert. Der Abstandsisolator 40 weist eine Durchgriffsöffnung 44 auf, welche von dem zweiten Anschlussbolzen 62 durchragt wird.

Die Deckelanordnung 15 umfasst auch eine Deckenplattenisolierfolie 36, welche auf der dem Behälter 13 abgewandten Seite der Deckplatte 23 aufgeklebt ist. Die Deckenplattenisolierfolie 36 weist eine erste Folienöffnung 37 auf, welche von dem negativen Terminal 21 und der Potentialplatte 17 durchragt wird. Die Deckenplattenisolierfolie 36 weist auch eine zweite Folienöffnung 38 auf, auf deren Funktion später eingegangen wird. Die Deckenplattenisolierfolie 36 weist auch eine dritte Folienöffnung 39 auf, welche von dem positiven Terminal 22, der Verbindungsplatte 32, der Verbindungsplattenisolierung 35 und dem Abstandsisolator 40 durchragt wird.

Zwischen der Deckplatte 23 und dem ersten Kollektor 7 ist ein erster Anschlussisolator 46 vorgesehen, welcher die Deckplatte 23 elektrisch von dem ersten Kollektor 7 isoliert. Der erste Anschlussisolator 46 weist eine erste Isolatoröffnung 56 auf, welche der erste Anschlussbolzen 61 durchgreift.

Zwischen der Deckplatte 23 und dem zweiten Kollektor 9 ist ein zweiter Anschlussisolator 47 vorgesehen, welcher die Deckplatte 23 elektrisch von dem zweiten Kollektor 9 isoliert. Der zweite Anschlussisolator 47 weist eine zweite Isolatoröffnung 57 auf, welche der zweite Anschlussbolzen 62 durchgreift.

Ein erster Dichtring 51 ist zwischen dem ersten Anschlussbolzen 61 und der Deckplatte 23 angeordnet. Der erste Dichtring 51 ist dabei um den ersten Anschlussbolzen 61 herum gelegt und befindet sich in der ersten Decköffnung 24 der Deckplatte 23. Der erste Dichtring 51 isoliert den ersten Anschlussbolzen 61 elektrisch von der Deckplatte 23. Zusätzlich dichtet der erste Dichtring 51 die erste Decköffnung 24 luftdicht und flüssigkeitsdicht ab. Somit ist insbesondere ein Eindringen von Feuchtigkeit durch die erste Decköffnung 24 in das Zellengehäuse 3 hinein, sowie ein Austreten von Elektrolyt durch die erste Decköffnung 24 aus dem Zellengehäuse 3 heraus verhindert.

Ein zweiter Dichtring 52 ist zwischen dem zweiten Anschlussbolzen 62 und der Deckplatte 23 angeordnet. Der zweite Dichtring 52 ist dabei um den zweiten Anschlussbolzen 62 herum gelegt und befindet sich in der zweiten Decköffnung 25 der Deckplatte 23. Der zweite Dichtring 52 isoliert den zweiten Anschlussbolzen 62 elektrisch von der Deckplatte 23. Zusätzlich dichtet der zweite Dichtring 52 die zweite Decköffnung 25 luftdicht und flüssigkeitsdicht ab. Somit ist insbesondere ein Eindringen von Feuchtigkeit durch die zweite Decköffnung 25 in das Zellengehäuse 3 hinein, sowie ein Austreten von Elektrolyt durch die zweite Decköffnung 25 aus dem Zellengehäuse 3 heraus verhindert.

Die Deckplatte 23 des Zellengehäuses 3 umfasst ferner eine Berstöffnung 33, welche von einer Berstscheibe 34 verschlossen ist. Im Falle eines Überdrucks innerhalb des Zellengehäuses 3 öffnet die Berstscheibe 34, wodurch der Überdruck durch die Berstöffnung 33 nach außen entweichen kann. Dadurch wird ein Bersten des Zellengehäuses 3 verhindert. Die Berstöffnung 33 in der Deckplatte 23 fluchtet dabei mit der zweiten Folienöffnung 38 in der Deckenplattenisolierfolie 36.

Die Batteriezelle 2 weist vorliegend auch eine Überladungsschutzvorrichtung (overcharge safety device, OSD) auf. Die Überladungsschutzvorrichtung umfasst eine in der Deckplatte 23 des Zellengehäuses 3 vorgesehene OSD-Öffnung 29, welche von einer OSD-Membran 28 verschlossen ist. Die OSD-Membran 28 ist als dünne Metallfolie ausgeführt. Im Falle eines Überdrucks innerhalb des Zellengehäuses 3, welcher beispielsweise durch einen Temperaturanstieg infolge einer Überladung der Batteriezelle 2 eintreten kann, verformt sich die OSD-Membran 28 und berührt dabei die Verbindungsplatte 32. Der Abstandsisolator 40 weist dazu eine Kurzschlussöffnung 42 auf, welche die OSD-Membran 28 bei einer Verformung durchgreifen kann. Dadurch entsteht ein Kurzschluss zwischen dem Zellengehäuse 3 und dem zweiten Kollektor 9, wodurch ein Ladevorgang der Batteriezelle 2 unterbrochen wird.

Im Fall eines Fehlers in der Batteriezelle 2 gemäß der ersten Ausführungsform kann auch eine Zersetzung der Kathode beginnen. Dabei wird Sauerstoff innerhalb des Zellengehäuses 3 frei gesetzt. Der freigesetzte Sauerstoff reagiert mit dem in dem Elektrolyt enthaltenen Luminol. Die Reaktion des Luminol mit Sauerstoff erzeugt eine auf Chemolumineszenz basierende optische Wirkung. Es wird also eine elektromagnetische Strahlung, beispielsweise im Infrarotbereich, im sichtbaren Bereich oder im Ultraviolettbereich erzeugt, welche vorliegend als Licht bezeichnet wird.

Das aufgrund der Reaktion des Luminol mit Sauerstoff erzeugte Licht wird dann von dem lichtleitenden Separator zu dem optischen Sensor 70 übertragen und von dem optischen Sensor 70, der vorliegend als Fotodiode ausgeführt ist, detektiert.

Sofern in dem Elektrolyt eine Substanz enthaltenen ist, welche bei einer Reaktion mit Sauerstoff eine Änderung der Farbe des Elektrolyten hervorruft, so wird die Änderung der Farbe des Elektrolyten von einem als Spektrometer ausgeführten Sensor 70 detektiert.

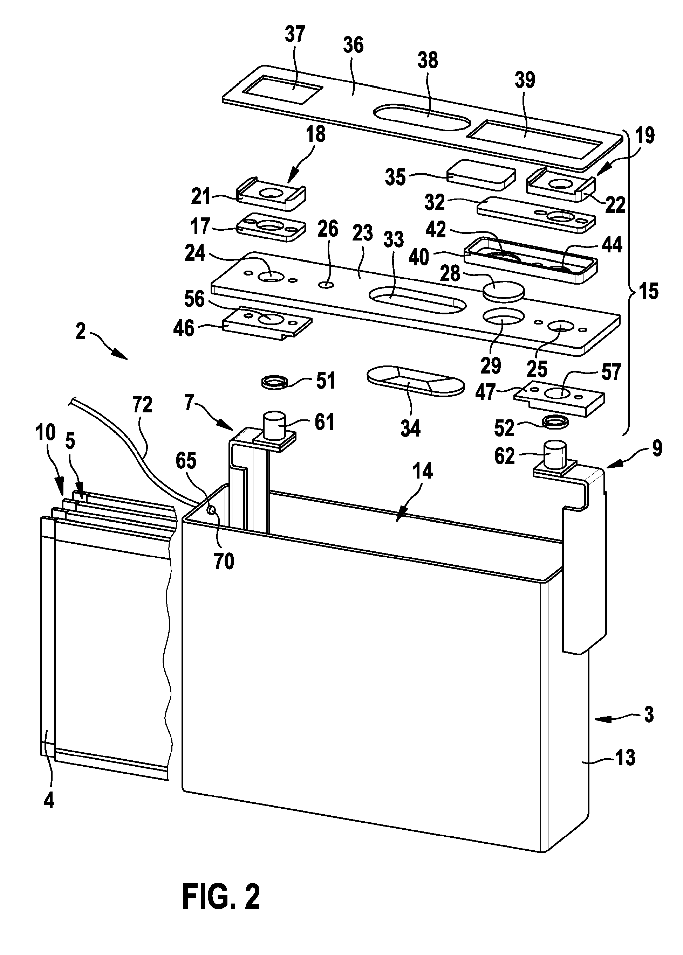

Eine Batteriezelle 2 gemäß einer zweiten Ausführungsform ist in Figur 2 in Explosionsdarstellung gezeigt. Die Batteriezelle 2 gemäß der zweiten Ausführungsform ist weitgehend gleich der in Figur 1 gezeigten Batteriezelle 2 gemäß der ersten Ausführungsform aufgebaut. Im Folgenden werden in erster Linie die Unterschiede beschrieben.

An dem Behälter 13 des Zellengehäuses 3 ist eine Durchführöffnung 65 vorgesehen. Ein Lichtwellenleiter 72 durchgreift die Durchführöffnung 65 mit einem Endbereich. Der Endbereich des Lichtwellenleiters 72 stellt den optischen Sensor 70 dar. Ein zweiter Endbereich des Lichtwellenleiters 72 ist mit einer nicht gezeigten, externen Steuereinheit verbunden. Der Lichtwellenleiter 72 ist dabei als Glasfaserkabel ausgeführt.

Im Fall eines Fehlers in der Batteriezelle 2 gemäß der zweiten Ausführungsform kann eine Zersetzung der Kathode beginnen. Dabei wird Sauerstoff innerhalb des Zellengehäuses 3 frei gesetzt. Der freigesetzte Sauerstoff reagiert mit dem in dem Elektrolyt enthaltenen Luminol. Die Reaktion des Luminol mit Sauerstoff erzeugt eine auf Chemolumineszenz basierende optische Wirkung. Es wird also Licht erzeugt.

Das aufgrund der Reaktion des Luminol mit Sauerstoff erzeugte Licht wird dann von dem lichtleitenden Separator zu dem optischen Sensor 70 übertragen, der als Endbereich des Lichtwellenleiters 72 ausgestaltet ist.

Der als Endbereich des Lichtwellenleiters 72 ausgestaltete optische Sensor 70 detektiert das innerhalb des Zellengehäuses 3 erzeugtes Licht, welches in den Endbereich des Lichtwellenleiters 72 einstrahlt. Der Lichtwellenleiter 72 überträgt das in den Endbereich des Lichtwellenleiters 72 eingestrahlte Licht zu der externen Steuereinheit.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Erkennung einer Zersetzung einer Kathode einer Batteriezelle (2), wobei
eine in einem Elektrolyt der Batteriezelle (2) enthaltene Substanz mit Sauerstoff reagiert, der bei der Zersetzung der Kathode frei wird, wobei durch die Reaktion der Substanz mit dem Sauerstoff eine optische Wirkung erzeugt wird, und
die optische Wirkung von einem innerhalb eines Zellengehäuses (3) der Batteriezelle (2) angeordneten optischen Sensor (70) detektiert wird.

2. Verfahren nach Anspruch 1, **dadurch gekennzeichnet, dass** die optische Wirkung auf Chemolumineszenz basiert.

3. Verfahren nach Anspruch 1, **dadurch gekennzeichnet, dass** die optische Wirkung auf einer Änderung der Farbe des Elektrolyten basiert.

4. Batteriezelle (2), umfassend ein Zellengehäuse (3),
eine Anode (5), eine Kathode, einen Separator und einen Elektrolyt, **dadurch gekennzeichnet, dass**
in dem Elektrolyt eine Substanz enthalten ist, die mit Sauerstoff reagiert, wobei die Reaktion der Substanz mit Sauerstoff eine optische Wirkung erzeugt, und
innerhalb des Zellengehäuses (3) ein optischer Sensor (70) angeordnet ist, welcher die optische Wirkung detektiert.

5. Batteriezelle (2) nach Anspruch 4, **dadurch gekennzeichnet, dass** die optische Wirkung auf Chemolumineszenz basiert.

6. Batteriezelle (2) nach einem der Ansprüche 4 bis 5, **dadurch gekennzeichnet, dass**
der optische Sensor (70) als lichtempfindlicher Sensor ausgeführt ist.

7. Batteriezelle (2) nach einem der Ansprüche 4 bis 5, **dadurch gekennzeichnet, dass**
der optische Sensor (70) ein Endbereich eines an das Zellengehäuse (3) angeschlossenen Lichtwellenleiters (72) ist.

8. Batteriezelle (2) nach einem der Ansprüche 4 bis 7, **dadurch gekennzeichnet, dass**
der Separator lichtleitend ausgebildet ist.

9. Batteriezelle (2) nach einem der Ansprüche 4 bis 7, **dadurch gekennzeichnet, dass**
der Separator lichtleitende Fasern umfasst.

10. Batteriezelle (2) nach Anspruch 4, **dadurch gekennzeichnet, dass** die optische Wirkung auf einer Änderung der Farbe des Elektrolyten basiert.

11. Batteriezelle (2) nach Anspruch 10, **dadurch gekennzeichnet, dass** der optische Sensor (70) als Spektrometer ausgeführt ist.

12. Verwendung des Verfahrens nach einem der Ansprüche 1 bis 3 und/oder einer Batteriezelle (2) nach einem der Ansprüche 4 bis 11 in einem Elektrofahrzeug (EV), in einem Hybridfahrzeug (HEV), in einem Plug-In-Hybridfahrzeug (PHEV), in einer stationären Batterie oder in einer Batterie in einer marinen Anwendung.
